# EUROPEAN PATENT SPECIFICATION

(11) **EP 4 249 166 B1**
(45) Date of publication and mention of the grant of the patent: **22.01.2025**
(21) Application number: 22163789.5
(22) Date of filing: 23.03.2022
(51) Int. Cl.: B23P 19/06, B25B 29/02, F03D 13/10, F03D 13/20, F03D 80/50, B25B 29/00, F03D 80/55

(54) **TIGHTENING DEVICE FOR TIGHTENING A SERIES OF NUTS PRE-SCREWED ON BOLTS**
ANZIEHVORRICHTUNG ZUM ANZIEHEN EINER REIHE VON AUF BOLZEN VORGESCHRAUBTEN MUTTERN
DISPOSITIF DE SERRAGE POUR SERRER UNE SÉRIE D'ÉCROUS PRÉ-VISSÉS SUR DES BOULONS

(43) Date of publication of application: 27.09.2023
(73) Proprietor: ADMEDE AB, 211 19 Malmö (SE)
(72) Inventor: JAGD, Lars, 211 15 Malmö (SE); JOHST, Kenneth, 1970 Frederiksberg C (DK); MARINITSCH, Gerald, 8401 Kalsdorf (AT)
(74) Representative: Schwarz & Partner Patentanwälte GmbH

(56) References cited:
- EP-A1- 2 607 685
- EP-A1- 3 163 071
- EP-A1- 3 195 991
- JP-B2- H0 780 104

## Description

The present invention is related to a tightening device for tightening a series of nuts pre-screwed on bolts according to the preamble of claim 1. Such a device, according to the preamble of claim 1, is disclosed in EP 3 195 991 A1.

In the field of modern energy production, wind turbines play an essential part to provide renewable, sustainable, and clean energy for the energy market. Wind turbines comprise a tower, on which a rotor is mounted, which is connected to an electric generator. The tower can reach a height of 100 meters, 150 meters, or even more depending on the specific requirements resulting from, among others, the location of the wind turbine. The tower consists of several tube segments with a length of for instance 20 meters or 30 meters. These segments are connected by circular flange connections on each side of the tube segments. During erection of the wind turbine on site, the tube segments are fitted together and connected with the joint circular flange connections with bolts and nuts. Large quantities of bolts, typically in the hundreds, of large size are necessary to establish the required stiffness and strength of the connections. In order to achieve the appropriate defined stiffness and strength in the joints, all the bolts have to be bolted down with a predefined preload or torque, and according to a specific bolt tightening pattern.

Previously, this operation was performed manually, using torque wrenches or similar tools.

Therefore, the construction of wind turbine towers was very labor intensive. In order to speed up the construction, robots were developed which performed the bolt tightening sequence automatically. Document EP 2 607 685 A1 discloses a robot to bolt down a series of nut bolts in a joint circular flange connection of a wind turbine. This robot comprises at least two wheels and a drive to transport the robot along the series of nut bolts and a tool to bolt down a nut bolt with a predefined torque. This drive used in this robot is a belt drive, which interacts with a side wall of the tower in order to propel itself forward. In order to achieve enough friction with the side wall, several electromagnets are provided, to press the belt drive against the side wall. Using the side wall as a means to propel the robot forward is beneficial, because no obstacles like metal filings, other tools, or further obstructions can be encountered on the side wall. This construction therefore leads to a reliable propulsion of the robot. A disadvantage of this solution is, that these electromagnets lead to significant power requirements for the operation of the robot and increase the complexity and cost of the robot.

The technical problem of the present invention is therefore to provide a means for automatically tightening the bolts of a flange connection, which is cheaper and easier to produce than previous solutions, while still providing reliable propulsion along the flange connection.

This problem is solved by the provision of a tightening device according to the subject matter of claim 1. The tightening device according to the invention is configured for tightening a series of nuts pre-screwed on bolts. These bolts are arranged in a linear or in a curved flange connection, wherein each nut comprises a top surface located at one end of the nut. The top surfaces are arranged in a nut plane of the flange connection, and the tightening device comprises a propulsion unit for moving the tightening device along the flange connection. The propulsion unit of the device comprises a continuous drive. According to the invention, in an operating state of the tightening device, the continuous drive is disposed essentially on the nut plane on one or more top surfaces of one or more of the nuts.

The top surfaces of the nuts are always arranged in the nut plane, since even if the nuts are not yet tightened, the weight of the bolts ensures, that the nuts always abut against the flange connection of the respective tube segment of the tower. Therefore, the nut plane always provides a level plane on which the continuous drive can operate. Also, the top surfaces of the nuts are always free from obstacles, which may hinder the locomotion of the tightening device. Furthermore, by using a continuous drive, the advantage is achieved, that the continuous drive interacts with the nuts in a way, that the continuous drive can also grip the edges of the nuts and can use these edges to provide grip. Additionally, the continuous drive is very robust and long lasting. The construction of the tightening device according to the invention therefore provides the advantage of a reliable and robust means of propulsion, which does not need any additional mechanism for attaching the continuous drive to the drive surface, and is therefore less complicated and cheaper to produce than known solutions in the prior art.

According to a preferred embodiment of the tightening device according to the invention, the propulsion unit comprises a guide element, which in the operating state of the tightening device is preferably facing a side surface of one or more of the nuts or bolts of the flange connection. The guide element decreases the risk, that the continuous drive leaves the top surfaces of the nuts during operation of the tightening device. This is particularly beneficial when operating the tightening device at high speeds.

The continuous drive preferably comprises a chain of interlinked chain segments, wherein one or more of the chain segments preferably comprises a friction element oriented towards the nut plane in the operating state, wherein the friction element is preferably made of a rubber or plastic material. The friction element increases the friction of the continuous drive against the top surfaces of the nuts. The friction element is also preferably replaceable. By replacing the friction element, the lifecycle of the continuous drive can be extended. The friction element may also be glued to the chain segment. According to the preferred embodiment of the tightening device according to the invention, each of the chain segments comprises at least one friction element. The chain is, in an operating state of the tightening device, disposed essentially on the nut plane on one or more top surfaces of one or more of the nuts. According to an alternative embodiment, the continuous drive may comprise a drive belt, which may have a circular or a flat cross section wherein in an operating state of the tightening device, the drive belt is disposed essentially on the nut plane on one or more top surfaces of one or more of the nuts.

The propulsion unit may preferably comprise a swivel joint, which pivotably supports the continuous drive. The swivel joint enables the continuous drive to adapt to different curvatures and radii of the flange connection.

According to the preferred embodiment, the tightening device also comprises a positioning unit, which is adapted to control the continuous drive according to positioning information. This positioning unit preferably comprises a camera, which in the operating state of the tightening device is configured to capture image data of the flange connection, wherein the positioning unit is configured to extract the positioning information from the image data. By using the positioning unit, the tightening device may autonomously tighten the nuts of the flange connection according to a predefined tightening sequence. Furthermore, the positioning device ensures, that each nut, which has to be tightened is aligned with the tightening device according to specification.

The tightening device may also comprise a nut tightening unit and two propulsion units disposed on essentially opposite sides of the nut tightening unit, wherein in the operating state of the tightening device, each continuous drive of each propulsion unit is disposed essentially on the nut plane on one or more top surfaces of one or more of the nuts. By providing two continuous drives on opposite sides of the tightening unit, the smoothness of the movement of the tightening device can be improved.

The propulsion unit may also comprise two guide elements, which in the operating state of the tightening device are facing opposite side surfaces of one or more of the nuts or bolts of the flange connection. This improves the guiding effect when operating the tightening device at high speeds.

Furthermore, the continuous drive may comprise two chains, wherein in the operating state of the tightening device, each chain is disposed on an opposite side of at least one bolt essentially on the nut plane on one or more top surfaces of one or more of the nuts. Hereby an increased surface area can be utilized for traction of the continuous drive.

The tightening device according to the invention as well as preferred and alternative embodiments will be described hereinbelow with reference to the figures.
Figure 1 shows a frontal view of a tightening device according to the invention.
Figure 2 shows the tightening device according to the invention in a perspective view.
Figure 3 shows a cross sectional view of the tightening device according to the invention.
Figure 4 shows a propulsion unit of the tightening device according to the invention in a frontal view.
Figure 5 shows the propulsion unit of figure 4 in a side view.
Figure 6 shows the propulsion unit of the tightening according to figure 4 placed on a series of nuts of a flange connection.
Figure 7 shows the propulsion unit of figure 6 in a side view.

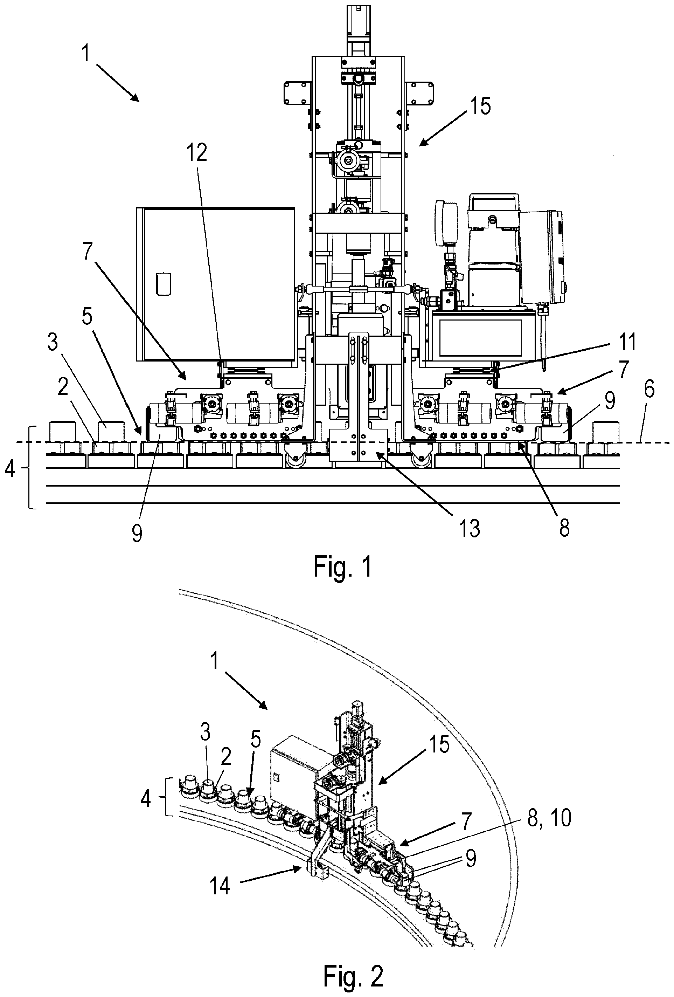

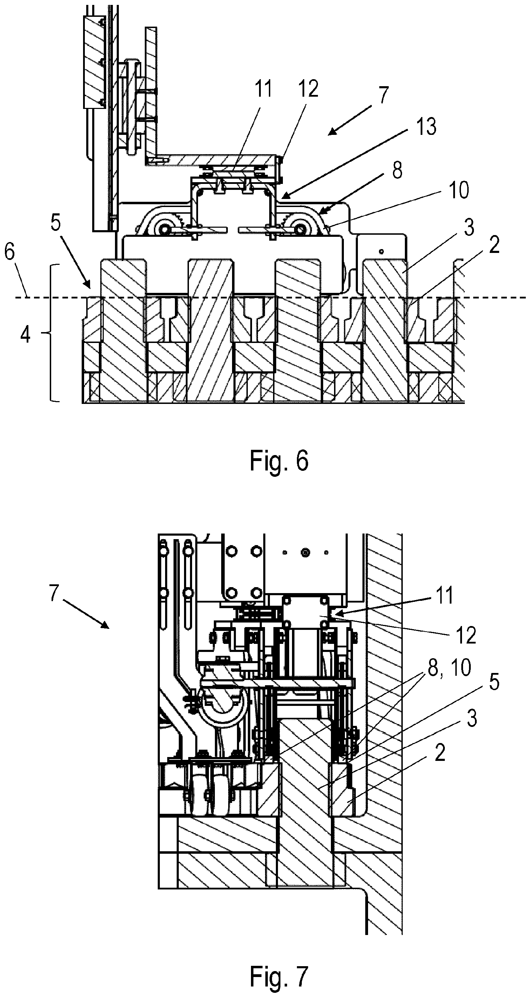

A tightening device 1 according to the invention is shown in figure 1 in a preferred embodiment in a frontal view and in figure 2 in a perspective view in an operating state. The tightening device 1 is designed for tightening a series of nuts 2 pre-screwed on bolts 3, which bolts 3 are arranged in a linear or in a curved flange connection 4. Each nut 2 comprises a top surface 5 located at one end of the nut 2, wherein the top surfaces 5 are arranged in a nut plane 6 of the flange connection 4, and wherein the tightening device 1 comprises a propulsion unit 7 for moving the tightening device 1 along the flange connection 4. According to the invention, the propulsion unit 7 comprises a continuous drive 8, wherein in the operating state of the tightening device 1, the continuous drive 8 is disposed essentially on the nut plane 6 on one or more top surfaces 5 of one or more of the nuts 2. This is shown in further detail in figure 6 and figure 7. The continuous drive 8 therefore uses the top surfaces 5 of the nuts 2 as a drive surface for propelling the tightening device 1 along the flange connection 4 in either direction. Since the top surfaces 5 naturally align in the nut plane 6 due to the weight of the bolts 3, which traverse the flange connection 4, the top surfaces 5 provide a level drive surface. By using the continuous drive 8 according to the invention, these top surfaces 5 can be used to propel the tightening device 1 forward. The top surfaces 5 are also naturally free form obstacles like tools or other equipment, which may hinder the movement of the tightening device 1. By using the continuous drive 8, spaces between the nuts 2 can also easily be bridged, which results in a smooth movement of the tightening device 1. In order to bridge these gaps or spaces between the nuts 2, the continuous drive 8 preferably has a length, which is greater than a gap width between two adjacent nuts 2. The continuous drive 8 also has the advantage, that it is able to grip edges of the nuts 2 which results in increased traction on the nuts 2. The construction of the tightening device 1 according to the invention therefore provides a reliable and robust means of propulsion for the tightening device 1, which is simple and easy to construct.

According to the preferred embodiment of the tightening device 1 according to the invention, the propulsion unit 7 comprises a guide element 9, which in the operating state of the tightening device 1 is preferably facing a side surface of one or more of the nuts 2 or bolts 3 of the flange connection 4. As can be seen in figure 1 and figure 2, the guide element 9 is arranged facing a side surface of the bolts 3. Preferably, two guide elements 9 are provided on each propulsion unit 7, which are arranged on opposite sides of the nuts 2 and/or bolts 3 in the operating state of the tightening device 1. The provision of one or more guide elements 9 secures, that the continuous drive 8 is aligned with the curvature of the flange connection 4 during operation or during movement of the tightening device 1.

The continuous drive 8 preferably comprises a chain 10 of interlinked chain segments, which are not shown in the figures in detail. The chain 10 can be seen for example, in figure 6. These chain segments work like chain segments of a tank chain or a chain of an excavator. One or more of these chain segments preferably comprise a friction element oriented towards the nut plane 6 in the operating state of the tightening device 1, wherein the friction element is preferably made of a rubber or plastic material. The friction elements increase the traction of the continuous drive 8 on the top surfaces 5 of the nuts 2, and furthermore reduce wear and tear on the continuous drive 8. Preferably each of the chain segments comprises at least one friction element. The friction elements may be replaceable, or permanently fixed to the chain segments. They may for example be glued or riveted to the chain segments. Replaceable friction elements increase the service life of the continuous drive 8, wherein permanently fixed friction elements reduce the risk of losing one or more of the friction elements during operation of the tightening device 1. The chain 10 is, in an operating state of the tightening device 1, disposed essentially on the nut plane 6 on one or more top surfaces 5 of one or more of the nuts 2. According to an alternative embodiment, the continuous drive 8 may comprise a drive belt, which may have a circular or a flat cross section wherein in an operating state of the tightening device 1, the drive belt is disposed essentially on the nut plane 6 on one or more top surfaces 5 of one or more of the nuts 2.

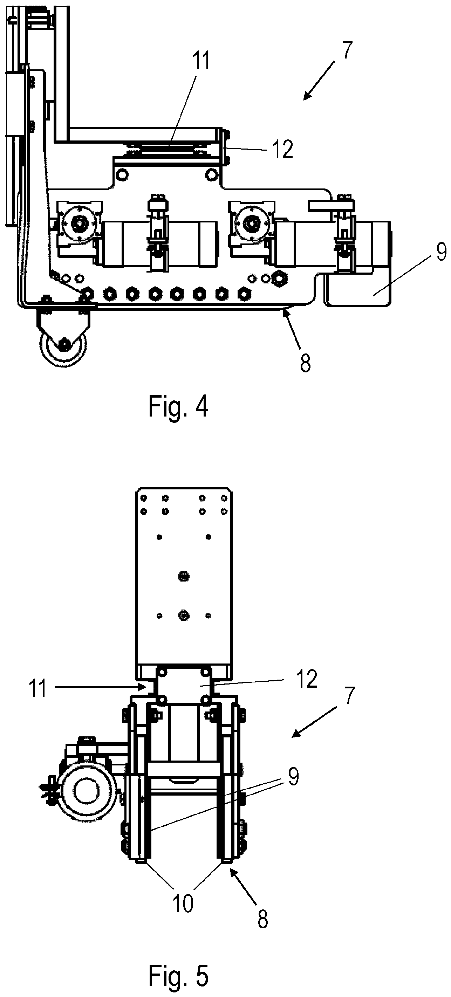

As can be seen in figure 1 and figure 4, the propulsion unit 7 of the tightening device 1 according to the invention comprises, according to the preferred embodiment, a swivel joint 11, which pivotally supports the continuous drive 8. The swivel joint 11 ensures, that the continuous drive 8 can follow narrow curvatures of the flange connection 4. The swivel joint 11 may also comprise a locking mechanism or a locking plate 12 in order to lock the movement of the swivel joint 11 if necessary. The locking plate 12 is shown in figure 4 and figure 5.

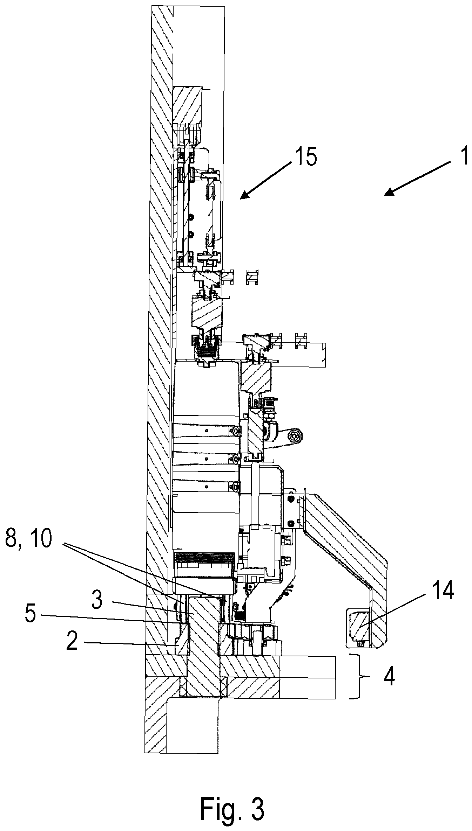

The continuous drive 8 may also comprise a tensioning mechanism 13 as shown in figure 6. Furthermore, the tightening device 1 may also comprise a positioning unit, which is adapted to control the continuous drive 8 according to positioning information. The positioning unit may also comprise a camera 14, which is shown in figures 1, 2 and 3, which in the operating state of the tightening device 1 is configured to capture image data of the flange connection 4, wherein the positioning unit is configured to extract the positioning information from the image data. The positioning unit enables the tightening device 1 to precisely position itself over a specific nut 2 in order to tighten it. Furthermore, the positioning unit enables the tightening device 1 to tighten the nuts 2 according to a specific tightening sequence.

The tightening device 1 furthermore comprises a nut tightening unit 15 for tightening the nuts 2, and preferably two propulsion units 7 with continuous drives 8 disposed on essentially opposite sides of the nut tightening unit 15, as can be seen in figure 1. In the operating state of the tightening device 1, according to this embodiment, each continuous drive 8 is disposed essentially on the nut plane 6 on one or more top surfaces 5 of one or more of the nuts 2. The provision of two separate continuous drives 8 the smoothness of the movement of the tightening device 1 can be improved, and an increased drive surface for the propulsion of the tightening device 1 can be used.

The propulsion unit 7 according to the preferred embodiment as shown in the figures may also comprise two guide elements 9, as shown in figure 2, which in the operating state of the tightening device 1 are facing opposite side surfaces of one or more of the nuts 2 or bolts 3 of the flange connection 4. This is shown for example in figure 5 and figure 7. This improves the guiding effect when operating the tightening device at high speeds.

Furthermore, the continuous drive 8 may comprise two chains 10, wherein in the operating state of the tightening device, each chain 10 is disposed on an opposite side of at least one bolt 3 essentially on the nut plane 6 on one or more top surfaces 5 of one or more of the nuts 2. Hereby an increased surface area can be utilized for traction of the continuous drive 8. This configuration of the chains 10 is shown for example in figure 5 and figure 7. One or both of these chains 10 may according to an alternative embodiment be replaced by belts.

## Claims

1. Tightening device (1) for tightening a series of nuts (2) pre-screwed on bolts (3), which bolts (3) are arranged in a linear or in a curved flange connection (4), wherein each nut (2) comprises a top surface (5) located at one end of the nut (2), wherein the top surfaces (5) are arranged in a nut plane (6) of the flange connection (4), and wherein the tightening device (1) comprises a propulsion unit (7) for moving the tightening device (1) along the flange connection (4),
**characterized in that**
the propulsion unit (7) comprises a continuous drive (8), wherein in an operating state of the tightening device (1), the continuous drive (8) is disposed essentially on the nut plane (6) on one or more top surfaces (5) of one or more of the nuts (2).

2. Tightening device (1) according to claim 1, **characterized in that** the propulsion unit (7) comprises a guide element (9), which in the operating state of the tightening device (1) is preferably facing a side surface of one or more of the nuts (2) or bolts (3) of the flange connection (4).

3. Tightening device (1) according to claim 1 or 2, **characterized in that** the continuous drive (8) comprises a chain (10) of interlinked chain segments, wherein one or more of the chain segments preferably comprises a friction element oriented towards the nut plane (6) in the operating state, wherein the friction element is preferably made of a rubber or plastic material.

4. Tightening device (1) according to claim 3, **characterized in that** the friction element is replaceable.

5. Tightening device (1) according to claim 3, **characterized in that** the friction element is glued to the chain segment.

6. Tightening device (1) according to any of claims 3 to 5, **characterized in that** each of the chain segments comprises at least one friction element.

7. Tightening device (1) according to any of claim 1 to 6, **characterized in that** the propulsion unit (7) comprises a swivel joint (11), which pivotably supports the continuous drive (8).

8. Tightening device (1) according to any of claims 1 to 7, **characterized in that** the tightening device (1) comprises a positioning unit, which is adapted to control the continuous drive (8) according to positioning information.

9. Tightening device (1) according claim 8, **characterized in that** the positioning unit comprises a camera (14), which in the operating state of the tightening device (1) is configured to capture image data of the flange connection (4), wherein the positioning unit is configured to extract the positioning information from the image data.

10. Tightening device (1) according to any of claims 1 to 9, **characterized in that** the tightening device (1) comprises a nut tightening unit (15) and two propulsion units (7) disposed on essentially opposite sides of the nut tightening unit (15), wherein in the operating state of the tightening device (1), each continuous drive (8) of each propulsion unit (7) is disposed essentially on the nut plane (6) on one or more top surfaces (5) of one or more of the nuts (2).

11. Tightening device (1) according to any of claims 1 to 10, **characterized in that** the propulsion unit (7) comprises two guide elements (9), which in the operating state of the tightening device (1) are facing opposite side surfaces of one or more of the nuts (2) or bolts (3) of the flange connection (4).

12. Tightening device (1) according to any of claims 1 to 11, **characterized in that** the continuous drive (8) comprises two chains (10) of interlinked chain segments, wherein in the operating state of the tightening device (1), each chain (10) is disposed on an opposite side of at least one bolt (3) essentially on the nut plane (6) on one or more top surfaces (5) of one or more of the nuts (2).

## Patentansprüche

1. Anziehvorrichtung (1) zum Anziehen einer Reihe von auf Bolzen vorgeschraubten Muttern (2), wobei die Bolzen (3) in einer linearen oder in einer gekrümmten Flanschverbindung (4) angeordnet sind, wobei jede Mutter (2) eine obere Fläche (5) aufweist, die an einem Ende der Mutter (2) angeordnet ist, wobei die oberen Flächen (5) in einer Mutterebene (6) der Flanschverbindung (4) angeordnet sind, und wobei die Anziehvorrichtung (1) eine Antriebseinheit (7) zum Bewegen der Anziehvorrichtung (1) entlang der Flanschverbindung (4) umfasst,
**dadurch gekennzeichnet, dass**
die Antriebseinheit (7) einen kontinuierlichen Antrieb (8) aufweist, wobei der kontinuierliche Antrieb (8) in einem Betriebszustand der Anziehvorrichtung (1) im Wesentlichen in der Mutterebene (6) auf einer oder mehreren oberen Flächen (5) einer oder mehrerer der Muttern (2) angeordnet ist.

2. Anziehvorrichtung (1) nach Anspruch 1, **dadurch gekennzeichnet, dass** die Antriebseinheit (7) ein Führungselement (9) aufweist, das im Betriebszustand der Anziehvorrichtung (1) vorzugsweise einer Seitenfläche einer oder mehrerer der Muttern (2) oder Bolzen (3) der Flanschverbindung (4) zugewandt ist.

3. Anziehvorrichtung (1) nach Anspruch 1 oder 2, **dadurch gekennzeichnet, dass** der kontinuierliche Antrieb (8) eine Kette (10) aus miteinander verketteten Kettensegmenten aufweist, wobei eines oder mehrere der Kettensegmente vorzugsweise ein im Betriebszustand zur Mutterebene (6) hin ausgerichtetes Reibelement umfasst, wobei das Reibelement vorzugsweise aus einem Gummi- oder Kunststoffmaterial besteht.

4. Anziehvorrichtung (1) nach Anspruch 3, **dadurch gekennzeichnet, dass** das Reibelement austauschbar ist.

5. Anziehvorrichtung (1) nach Anspruch 3, **dadurch gekennzeichnet, dass** das Reibelement mit dem Kettensegment verklebt ist.

6. Anziehvorrichtung (1) nach einem der Ansprüche 3 bis 5, **dadurch gekennzeichnet, dass** jedes der Kettensegmente zumindest ein Reibelement aufweist.

7. Anziehvorrichtung (1) nach einem der Ansprüche 1 bis 6, **dadurch gekennzeichnet, dass** die Antriebseinheit (7) ein Drehgelenk (11) aufweist, das den kontinuierlichen Antrieb (8) schwenkbar lagert.

8. Anziehvorrichtung (1) nach einem der Ansprüche 1 bis 7, **dadurch gekennzeichnet, dass** die Anziehvorrichtung (1) eine Positioniereinheit umfasst, die geeignet ist, den kontinuierlichen Antrieb (8) entsprechend einer Positionierinformation zu steuern.

9. Anziehvorrichtung (1) nach Anspruch 8, **dadurch gekennzeichnet, dass** die Positioniereinheit eine Kamera (14) umfasst, die im Betriebszustand der Anziehvorrichtung (1) dazu ausgebildet ist, Bilddaten der Flanschverbindung (4) zu erfassen, wobei die Positioniereinheit dazu ausgebildet ist, die Positionierinformation aus den Bilddaten zu extrahieren.

10. Anziehvorrichtung (1) nach einem der Ansprüche 1 bis 9, **dadurch gekennzeichnet, dass** die Anziehvorrichtung (1) eine Mutternspanneinheit (15) und zwei auf im Wesentlichen gegenüberliegenden Seiten der Mutternspanneinheit (15) angeordnete Antriebseinheiten (7) umfasst, wobei im Betriebszustand der Anziehvorrichtung (1) jeder kontinuierliche Antrieb (8) jeder Antriebseinheit (7) im Wesentlichen in der Mutterebene (6) auf einer oder mehreren oberen Flächen (5) einer oder mehrerer der Muttern (2) angeordnet ist.

11. Anziehvorrichtung (1) nach einem der Ansprüche 1 bis 10, **dadurch gekennzeichnet, dass** die Antriebseinheit (7) zwei Führungselemente (9) aufweist, die im Betriebszustand der Anziehvorrichtung (1) gegenüberliegenden Seitenflächen einer oder mehrerer der Muttern (2) oder Schrauben (3) der Flanschverbindung (4) zugewandt sind.

12. Anziehvorrichtung (1) nach einem der Ansprüche 1 bis 11, **dadurch gekennzeichnet, dass** der kontinuierliche Antrieb (8) zwei Ketten (10) aus miteinander verketteten Kettensegmenten umfasst, wobei im Betriebszustand der Anziehvorrichtung (1) jede Kette (10) auf einer gegenüberliegenden Seite zumindest eines Bolzens (3) im Wesentlichen auf der Mutterebene (6) auf einer oder mehreren oberen Flächen (5) einer oder mehrerer der Muttern (2) angeordnet ist.

## Revendications

1. Dispositif de serrage (1) pour serrer une série d'écrous (2) pré-vissés sur des boulons (3), lesquels boulons (3) sont agencés dans un raccord de bride linéaire ou incurvé (4), dans lequel chaque écrou (2) comprend une surface supérieure (5) située à une première extrémité de l'écrou (2), dans lequel les surfaces supérieures (5) sont agencées dans un plan d'écrou (6) du raccord de bride (4), et dans lequel le dispositif de serrage (1) comprend une unité de propulsion (7) pour déplacer le dispositif de serrage (1) le long du raccord de bride (4),
**caractérisé en ce que**
l'unité de propulsion (7) comprend un entraînement continu (8), dans lequel dans un état de fonctionnement du dispositif de serrage (1), l'entraînement continu (8) est disposé essentiellement sur le plan d'écrou (6) sur une ou plusieurs surfaces supérieures (5) d'un ou plusieurs des écrous (2).

2. Dispositif de serrage (1) selon la revendication 1, **caractérisé en ce que** l'unité de propulsion (7) comprend un élément de guidage (9) qui, dans l'état de fonctionnement du dispositif de serrage (1), fait de préférence face à une surface latérale d'un ou plusieurs des écrous (2) ou boulons (3) du raccord de bride (4).

3. Dispositif de serrage (1) selon la revendication 1 ou 2, **caractérisé en ce que** l'entraînement continu (8) comprend une chaîne (10) de segments de chaîne interconnectés, dans lequel un ou plusieurs des segments de chaîne comprennent de préférence un élément de friction orienté vers le plan d'écrou (6) dans l'état de fonctionnement, dans lequel l'élément de friction est de préférence réalisé en caoutchouc ou en matière plastique.

4. Dispositif de serrage (1) selon la revendication 3, **caractérisé en ce que** l'élément de friction est remplaçable.

5. Dispositif de serrage (1) selon la revendication 3, **caractérisé en ce que** l'élément de friction est collé au segment de chaîne.

6. Dispositif de serrage (1) selon l'une quelconque des revendications 3 à 5, **caractérisé en ce que** chacun des segments de chaîne comprend au moins un élément de friction.

7. Dispositif de serrage (1) selon l'une quelconque des revendications 1 à 6, **caractérisé en ce que** l'unité de propulsion (7) comprend une articulation pivotante (11), qui supporte de manière pivotante l'entraînement continu (8).

8. Dispositif de serrage (1) selon l'une quelconque des revendications 1 à 7, **caractérisé en ce que** le dispositif de serrage (1) comprend une unité de positionnement, qui est adaptée pour commander l'entraînement continu (8) en fonction d'informations de positionnement.

9. Dispositif de serrage (1) selon la revendication 8, **caractérisé en ce que** l'unité de positionnement comprend une caméra (14) qui, dans l'état de fonctionnement du dispositif de serrage (1), est configurée pour capturer des données d'image du raccord de bride (4), dans lequel l'unité de positionnement est configurée pour extraire les informations de positionnement à partir des données d'image.

10. Dispositif de serrage (1) selon l'une quelconque des revendications 1 à 9, **caractérisé en ce que** le dispositif de serrage (1) comprend une unité de serrage d'écrou (15) et deux unités de propulsion (7) disposées sur des côtés essentiellement opposés de l'unité de serrage d'écrou (15), dans lequel, dans l'état de fonctionnement du dispositif de serrage (1), chaque entraînement continu (8) de chaque unité de propulsion (7) est disposé essentiellement sur le plan d'écrou (6) sur une ou plusieurs surfaces supérieures (5) d'un ou plusieurs des écrous (2).

11. Dispositif de serrage (1) selon l'une quelconque des revendications 1 à 10, **caractérisé en ce que** l'unité de propulsion (7) comprend deux éléments de guidage (9) qui, dans l'état de fonctionnement du dispositif de serrage (1), font face à des surfaces latérales opposées d'un ou plusieurs des écrous (2) ou boulons (3) du raccord de bride (4).

12. Dispositif de serrage (1) selon l'une quelconque des revendications 1 à 11, **caractérisé en ce que** l'entraînement continu (8) comprend deux chaînes (10) de segments de chaîne interconnectés, dans lequel dans l'état de fonctionnement du dispositif de serrage (1), chaque chaîne (10) est disposée sur un côté opposé d'au moins un boulon (3) essentiellement sur le plan d'écrou (6) sur une ou plusieurs surfaces supérieures (5) d'un ou plusieurs des écrous (2).
